# EUROPÄISCHE PATENTSCHRIFT

(11) **EP 2 504 584 B1**
(45) Veröffentlichungstag und Bekanntmachung des Hinweises auf die Patenterteilung: **02.01.2019**
(21) Anmeldenummer: 10782257.9
(22) Anmeldetag: 18.11.2010
(51) Int. Cl.: F04F 5/22, F04F 5/54, B65G 47/91

(54) **DRUCKLUFTBETRIEBENER UNTERDRUCKERZEUGER ODER UNTERDRUCKGREIFER**
COMPRESSED-AIR-OPERATED VACUUM GENERATOR OR VACUUM GRIPPER
GÉNÉRATEUR DE DÉPRESSION OU DISPOSITIF DE PRÉHENSION PAR ASPIRATION FONCTIONNANT AVEC DE L'AIR COMPRIMÉ

(30) Priorität: 24.11.2009 DE 102009047083
(43) Veröffentlichungstag der Anmeldung: 03.10.2012
(73) Patentinhaber: J. Schmalz GmbH, 72293 Glatten (DE)
(72) Erfinder: SCHAAF, Walter, 72250 Freudenstadt-Grüntal (DE)
(74) Vertreter: DREISS Patentanwälte PartG mbB
(86) Internationale Anmeldenummer: PCT/EP2010/067770
(87) Internationale Veröffentlichungsnummer: WO 2011/064138

(56) Entgegenhaltungen:
- WO-A1-99/49216
- WO-A1-2009/073849
- GB-A- 646 124
- GB-A- 2 455 351
- US-A- 4 245 961

## Beschreibung

Die Erfindung betrifft einen mit Duckluft betriebenen Unterdruckerzeuger oder Unterdruckgreifer mit den Merkmalen des Oberbegriffs des Anspruchs 1.

Mehrstufenejektoren mit hintereinander geschalteten Venturidüsen sind z.B. aus der WO 99/49216 und von den Firmen Piab, SMC und Vtec bekannt. Ein Kennzeichen des Mehrstufenprinzips ist, dass der Abluftstrahl einer vorgeschalteten Stufe der Treibluftstrahl der nachgeschalteten Stufe ist Dabei kann z.B. eine Kombination des Coanda-Prinzip mit dem Venturi-Prinzip nützlich sein, den Saugvolumenstrom zu erhöhen. Allgemeine Vakuumerzeugungsprinzipien sind das Venturi-Prinzip mit einer Treib- und einer Empfängerdüse, das Bernoulli-Prinzip, bei dem "schnelle" Luft mit hohem dynamischem Druck einen statischen Unterdruck erzeugt, und das Coanda-Prinzip, bei dem Luft einer gekrümmten Fläche folgt. Die GB 2 455 351 A beschreibt einen zweistufigen Luftströmungsverstärker, welcher die Merkmale des Oberbegriffs des Anspruchs 1 aufweist.

Der Erfindung liegt die Aufgabe zugrunde, einen Unterdruckerzeuger oder Unterdruckgreifer bereitzustellen, mit welchem auf effiziente Weise Unterdruck erzeugt werden kann.

Diese Aufgabe wird mit einem Unterdruckerzeuger oder Unterdruckgreifer gelöst, der die Merkmale des Anspruchs 1 aufweist.

Der erfindungsgemäße Mehrstufenejektor weist mindestens zwei Vakuumerzeugungsstufen auf. Dabei ist der Abluftstrahl einer vorgeschalteten Vakuumerzeugungsstufe der Treibluftstrahl einer nachgeschalteten Vakuumerzeugungsstufe, und es werden mindestens zwei unterschiedliche Vakuumerzeugungsprinzipien verwendet.

Hierdurch werden folgende Vorteile erzielt. Durch die Kombination eines Prinzips für hohen Volumenstrom mit einem Prinzip für hohes Vakuum kann erreicht werden, dass das anzusaugende Objekt aufgrund des hohen Volumenstroms der Ansaugvorrichtung entgegen springt und aufgrund des hohen Unterdrucks stark festgehalten wird.

Dabei kann die Unterdruckbaueinheit erfindungsgemäß eine Unterdruck-Düse, ein Ejektor und/oder eine Unterdruck-Erzeugungsstufe sein und z.B. nach dem Venturi-Prinzip, dem Bernoulli-Prinzip, dem Coanda-Prinzip oder dem Vortex-Prinzip arbeiten.

Mindestens eine Ausströmöffnung einer Unterdruckbaueinheit mündet in die Treibluftöffnung der anderen Unterdruckbaueinheit ein. Die beiden Unterdruckbaueinheiten sind hintereinander geschaltet.

Vorteilhaft sind die Unterdruckbaueinheiten in Parallelschaltung und/oder Serienschaltung kombiniert. Dabei können der einen Unterdruckbaueinheit eine oder mehrere Unterdruckbaueinheiten nachgeschaltet sein, die ihrerseits aber parallel geschaltet sind.

Vorteilhaft und zur Verringerung des Bauvolumens sind die Unterdruckbaueinheiten in einem gemeinsamen Gehäuse angeordnet.

Bei einer Weiterbildung der Erfindung ist vorgesehen, dass wenigstens zwei verschiedene Saugkammern durch eine oder mehrere bewegliche Klappen voneinander getrennt oder miteinander verbindbar sind. Mittels dieser Klappen, die bevorzugt als Rückschlagklappen ausgebildet sind, können Volumenströme und dadurch erzeugte Unterdrücke gezielt gesteuert werden.

Dabei kann vorgesehen sein, dass das Schließen oder Öffnen der Klappen unterdruckabhängig und/oder volumenstromabhängig steuerbar ist und insbesondere automatisch erfolgt.

Vorteilhaft ist eine in die Saugkammer mündende Abblasvorrichtung vorgesehen, so dass der Unterdruck schnell abgebaut und das angesaugte Werkstück schnell abgeworfen werden kann.

Mit Vorzug sind zur Detektion der Strömungs- und/oder Druckverhältnisse, insbesondere in der Saugkammer, ein oder mehrere Sensoren vorgesehen.

Bei einer Weiterbildung ist vorgesehen, dass die nach wenigstens zwei unterschiedlichen Prinzipien zur Unterdruck-Erzeugung arbeitenden Unterdruckbaueinheiten gleichzeitig oder sequentiell arbeiten. Dabei kann die eine Unterdruckbaueinheit zur Erzeugung eines hohen Volumenstroms und die andere Unterdruckbaueinheit zur Erzeugung eines hohen Unterdrucks verwendet werden.

Weitere Vorteile, Merkmale und Einzelheiten der Erfindung ergeben sich aus den Unteransprüchen sowie der beigefügten Zeichnung. Dabei können die in der Zeichnung dargestellten sowie in der Beschreibung und in den Ansprüchen erwähnten Merkmale jeweils im Einzelnen als auch in beliebiger Kombination erfindungswesentlich sein.

In der Zeichnung zeigen:
Figur 1 eine Kombination des Venturi- und Coanda-Prinzips mit getrennten Vakuumkammern (Venturi-Düse umlaufend oder mehrere Einzeldüsen);
Figur 2 eine Kombination des Venturi- und Coanda-Prinzips mit einer Vakuumkammer, wobei der Abluftstrom der Venturi-Düsen den Treibluftstrom der Coanda-Düse darstellt (Venturi-Düse umlaufend oder mehrere Einzeldüsen);
Figur 3 eine Kombination des Venturi- und Bernoulli-Prinzips mit getrennten Vakuumkammern (Venturi-Düse umlaufend oder mehrere Einzeldüsen);
Figur 4 einen Mehrstufen-Ejektor mit einer Kombination einer Venturi-Düse mit einer Vortex-Düse in verschiedenen Ansichten. Dabei können die Venturi-Düsen auch als Coanda-Düsen ausgebildet sein;
Figur 5 einen Mehrstufen-Ejektor mit einer Kombination einer Coanda-Düse mit einer Venturi-Düse;
Figur 6 eine Kombination des Coanda- und Bernoulli-Prinzips mit nach außen geführtem Abluftstrom;
Figur 7 eine Kombination des Coanda- und Bernoulli-Prinzips mit nach innen geführtem Abluftstrom zum Absaugen von Luft und zum Erzeugen einer Absaugkraft; und
Figur 8 eine Kombination des Vortex- und Coanda-Prinzips.

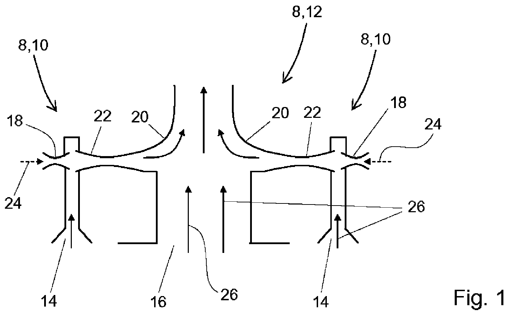

Die Figur 1 zeigt eine Kombination zweier Unterdruckbauein-heiten 8, nämlich einer Venturidüse 10 und einer Coandadüse 12 mit getrennten Vakuumkammern 14 und 16, wobei die Venturidüse 10 umlaufend oder als mehrere Einzeldüsen ausgebildet sein kann. Mit dem Bezugszeichen 18 ist der Druckluftanschluss der Venturidüse 10 und mit dem Bezugszeichen 20 ist der Druckluftanschluss der Coandadüse 12 bezeichnet. Dabei mündet der Abluftanschluss 22 der Venturidüse 10 in den Druckluftanschluss 20 der Coandadüse 12. Mit 24 ist die Druckluft und mir 26 die Saugluft bezeichnet.

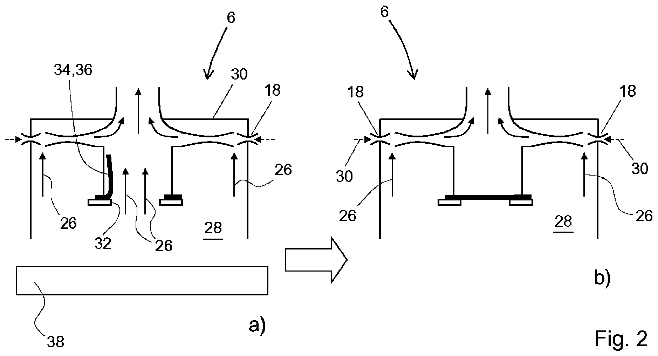

Die Figur 2 zeigt einen Unterdruckgreifer 6 mit der Kombination der Venturidüse 10 mit der Coandadüse 12 gemäß Figur 1 mit einer einzigen, gemeinsamen Vakuumkammer 28. Dabei ist der Druckluftanschluss 18 in ein Gehäuse 30 integriert, welches auch die Saugkammer 28 umgrenzt. In der Figur 2a) ist der Beginn des Ansaugvorganges dargestellt, bei welchem ein hoher Volumenstrom erzeugt wird. Hinter der Ansaugöffnung 32 der Coandadüse 12 ist eine Klappe 34, insbesondere eine Rückschlagklappe 36 befestigt, die vom Saugstrom 26 in Offenstellung bewegt wird. Bei einem angesaugten Werkstück 38 sinkt allmählich der Volumenstrom, so dass sich die Klappe 34 schließt, was in der Figur 2b) dargestellt ist. Die Coandadüse 12 ist nunmehr abgeschaltet, so dass nur noch die Venturidüse 10 betrieben wird. Dadurch sinkt der Volumenstrom nochmals, wobei sich aber der Unterdruck in der Vakuumkammer 28 erhöht.

Erfindungsgemäß dient die eine Unterdruckbauein-heit 8 vornehmlich zur Erzeugung eines hohen Volumenstromes und die andere Unterdruckbauein-heit 8 zur Erzeugung eines hohen Unterdruckes.

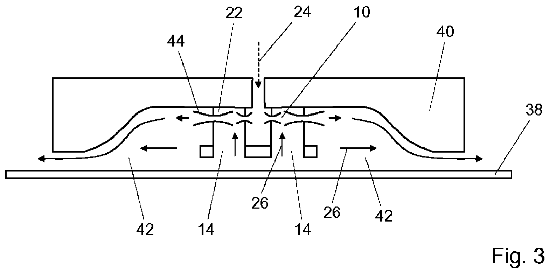

Die Figur 3 zeigt eine Kombination anderer Unterdruckbauein-heiten 8, nämlich eine Venturidüse 10 und eine Bernoullidüse 40 mit getrennten Vakuumkammern 14 und 42, wobei die Venturidüse 10 umlaufend oder als mehrere Einzeldüsen ausgebildet sein kann. Der Abluftanschluss 22 der Venturidüse 10 mündet auch hier in den Druckluftanschluss 20 der Bernoullidüse 40.

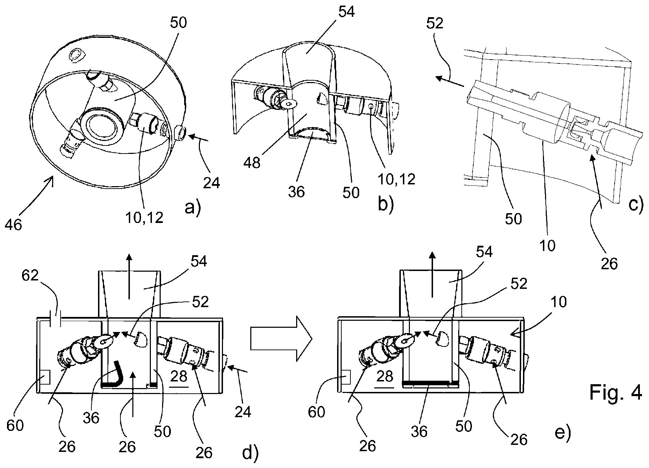

Die Figur 4 zeigt einen Mehrstufen-Ejektor 46 mit einer Kombination einer Venturidüse 10 mit einer Vortexdüse 48 in verschiedenen Ansichten. Dabei können die Venturidüsen 10 auch als Coandadüsen 12 ausgebildet sein. Die Venturidüse 10 mündet derart in einen zentralen Hauptströmungskanal 50 ein, dass deren Abluftstrom 52 in Richtung der Auslassöffnung 54 geneigt ist (Figuren 4c) und 4d)). Außerdem mündet der Abluftstrom 52 in einem Winkel in den zentralen Hauptströmungskanal 50 ein, der zwischen der Radialen und der Tangentialen liegt (Figuren 4a) und 4b)). Dadurch wird im zentralen Hauptströmungskanal 50 ein Wirbel verursacht der in Richtung der Auslassöffnung 54 gerichtet ist, so dass Saugluft 26 durch die untere Öffnung des zentralen Hauptströmungskanals 50 angesaugt wird. Dabei öffnet zu Beginn des Ansaugvorganges die Rückschlagklappe 36, da ein hoher Volumenstrom herrscht. Der dabei erzeugte Unterdruck ist noch gering (Figur 4d)). Sobald, wie in Figur 4e) dargestellt, der Volumenstrom abnimmt, schließt die Rückschlagklappe 36 und es wird lediglich Saugluft 26 über die Venturidüsen 10 angesaugt. Dadurch wird der Unterdruck in der Vakuumkammer 28 erhöht. Mit 60 ist ein Sensor, insbesondere Unterdrucksensor angedeutet. Und mit 62 ist eine separat ansteuerbare Abblasvorrichtung angedeutet, mit welcher der Unterdruck in der Vakuumkammer 28 nach dem Saugvorgang schnell abgebaut werden kann.

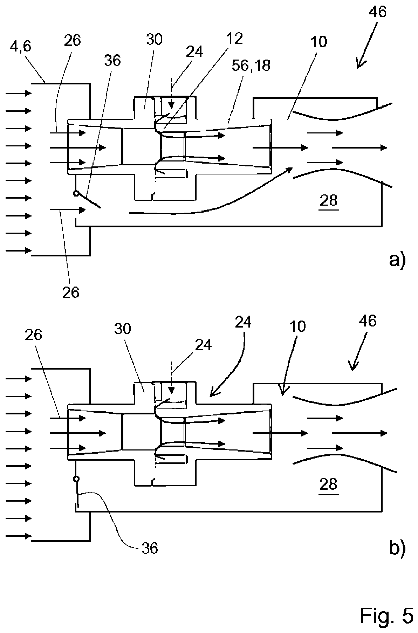

Die Figur 5 zeigt einen Mehrstufenejektor 46 mit einer Kombination einer Coandadüse 12 und einer Venturidüse 10 zum Betreiben Unterdruckgreifers 6, z.B. eines Flächensauggreifers 4. Die Druckluft 24 strömt radial in die Coandadüse 12 ein und es wird Saugluft 26 zentral in das Gehäuse 30 eingesaugt. Der Abluftanschluss 56 der Coandadüse 12 dient als Druckluftan-schluss 18 der Venturidüse 10. Zu Beginn des Ansaugvorganges öffnet die Rückschlagklappe 36, da ein hoher Volumenstrom herrscht. Der dabei erzeugte Unterdruck ist noch gering (Figur 5a)). Sobald, wie in Figur 5b) dargestellt, der Volumenstrom abnimmt, schließt die Rückschlagklappe 36 und es wird lediglich Saugluft 26 über die Coandadüse 12 angesaugt. Dadurch wird der Unterdruck in der Vakuumkammer 28 erhöht.

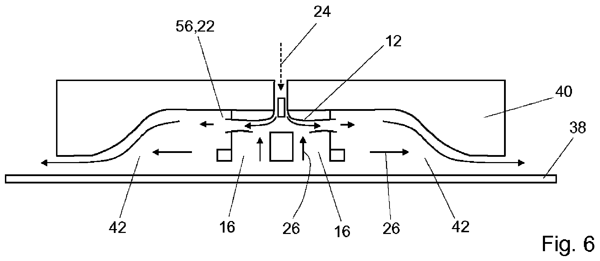

Die Figur 6 zeigt eine Kombination einer Coandadüse 12 und einer Bernoullidüse 40, ähnlich wie in der Figur 3 mit getrennten Vakuumkammern 16 und 42. Der Abluftanschluss 56 der Coandadüse 12 dient als Druckluftanschluss 20 für die Bernoullidüse 40.

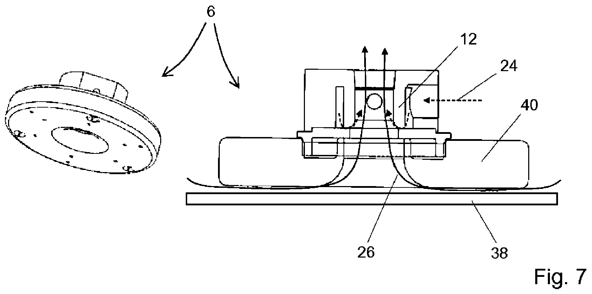

Die Figur 7 zeigt einen Unterdruckgreifer 6 mit einer Kombination einer Coandadüse 12 und einer Bernoullidüse 40 mit nach innen geführtem Abluftstrom zum Absaugen von Saugluft 26 und zum Erzeugen einer Absaugkraft für das Werkstück 38. An der Unterseite des Unterdruckgreifers 6 können Abstandshalter 58 vorgesehen sein, so dass auch bei angesaugtem Werkstück 38 eine permanente Strömung von Saugluft 26 aufrecht erhalten bleibt.

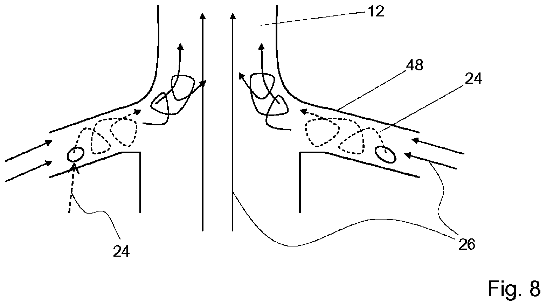

Die Figur 8 zeigt eine Kombination einer Vortexdüse 48 und einer Coandadüse 12. Die Einströmrichtung der Druckluft 24 in die Vortexdüse 48 entspricht der Ausführungsform der Figur 4, so dass in der Vortexdüse 48 ein die Saugluft 26 ansaugender Drall entsteht. Dieser drallbehaftete Abluftstrom strömt im Wesentlichen radial in die Coandadüse 12 ein und erzeugt einen zentralen Saugluftstrom.

## Patentansprüche

1. Druckluftbetriebener Unterdruckerzeuger oder Unterdruckgreifer (6) mit wenigstens zwei Unterdruckbaueinheiten (8), wobei jede Unterdruckbaueinheit (8) eine Saugkammer, eine in die Saugkammer mündende Ansaugöffnung, eine aus der Saugkammer ausmündende Ausströmöffnung und wenigstens eine in die Ausströmöffnung mündende Druckluft- oder Treibluftöffnung aufweist, **dadurch gekennzeichnet, dass** die Unterdruckbaueinheiten (8) nach wenigstens zwei unterschiedlichen Prinzipien zur druckluftgetriebenen Unterdruckerzeugung arbeiten, und dass mindestens eine Ausströmöffnung einer Unterdruckbaueinheit (8) in die Druckluft- oder Treibluftöffnung der anderen Unterdruckbaueinheit (8) einmündet.

2. Unterdruckerzeuger oder Unterdruckgreifer nach Anspruch 1, **dadurch gekennzeichnet, dass** die wenigstens eine Unterdruckbaueinheit (8) eine Unterdruck-Düse, ein Ejektor und/oder eine Unterdruck-Erzeugungsstufe ist.

3. Unterdruckerzeuger oder Unterdruckgreifer nach einem der vorhergehenden Ansprüche, **dadurch gekennzeichnet, dass** die Unterdruckbaueinheiten (8) in Parallelschaltung und/oder Serienschaltung kombiniert sind.

4. Unterdruckerzeuger oder Unterdruckgreifer nach einem der vorhergehenden Ansprüche, **dadurch gekennzeichnet, dass** die Unterdruckbaueinheiten (8) in einem gemeinsamen Gehäuse (30) angeordnet sind.

5. Unterdruckerzeuger oder Unterdruckgreifer nach einem der vorhergehenden Ansprüche, **dadurch gekennzeichnet, dass** wenigstens zwei verschiedene Saugkammern durch eine oder mehrere bewegliche Klappen (34) voneinander getrennt oder miteinander verbindbar sind.

6. Unterdruckerzeuger oder Unterdruckgreifer nach Anspruch 5, **dadurch gekennzeichnet, dass** das Schließen oder Öffnen der Klappen (34) unterdruckabhängig und/oder volumenstromabhängig steuerbar ist.

7. Unterdruckerzeuger oder Unterdruckgreifer nach einem der vorhergehenden Ansprüche, **dadurch gekennzeichnet, dass** wenigstens eines der Prinzipien das Venturi-Prinzip (10), das Bernoulli-Prinzip (40), das Coanda-Prinzip (12) oder das Vortex-Prinzip (48) ist.

8. Unterdruckerzeuger oder Unterdruckgreifer nach einem der vorhergehenden Ansprüche, **dadurch gekennzeichnet, dass** eine Abblasvorrichtung (62) vorgesehen ist.

9. Unterdruckerzeuger oder Unterdruckgreifer nach einem der vorhergehenden Ansprüche, **dadurch gekennzeichnet, dass** zur Detektion der Strömungs- und/oder Druckverhältnisse, insbesondere in der Saugkammer (28), ein Sensor (60) vorgesehen ist.

10. Unterdruckerzeuger oder Unterdruckgreifer nach einem der vorhergehenden Ansprüche, **dadurch gekennzeichnet, dass** die nach wenigstens zwei unterschiedlichen Prinzipien zur Unterdruck-Erzeugung arbeitenden Unterdruckbaueinheiten (8) gleichzeitig oder sequentiell arbeiten.

## Claims

1. Compressed-air-operated vacuum generator or vacuum gripper (6) with at least two vacuum units (8), wherein each vacuum unit (8) has a suction chamber, an intake opening which opens into the suction chamber, an outlet opening which exits from the suction chamber and at least one compressed air or drive air opening which opens into the outlet opening, **characterized in that** the vacuum units (8) operate according to at least two different principles of compressed air driven generation of a negative pressure, and **in that** at least one outflow opening of one vacuum unit (8) opens into the compressed air or drive air opening of the other vacuum unit (8).

2. Vacuum generator or vacuum gripper according to claim 1, **characterized in that** the at least one vacuum unit (8) is a vacuum nozzle, an ejector and/or a vacuum-generating stage.

3. Vacuum generator or vacuum gripper according to one of the preceding claims, **characterized in that** the vacuum units (8) are combined in a parallel connection and/or a serial connection.

4. Vacuum generator or vacuum gripper according to one of the preceding claims, **characterized in that** the vacuum units (8) are arranged in a common housing (30).

5. Vacuum generator or vacuum gripper according to one of the preceding claims, **characterized in that** at least two different suction chambers can be separated from each other or connected to one another by one or more movable flaps (34).

6. Vacuum generator or vacuum gripper according to claim 5, **characterized in that** closing or opening of the flaps (34) is controllable depending on vacuum pressure and/or volume flow rate.

7. Vacuum generator or vacuum gripper according to one of the preceding claims, **characterized in that** at least one of the principles is the Venturi principle (10), the Bernoulli principle (40), the Coanda principle (12) or the vortex principle (48).

8. Vacuum generator or vacuum gripper according to one of the preceding claims, **characterized in that** a blow-off system (62) is provided.

9. Vacuum generator or vacuum gripper according to one of the preceding claims, **characterized in that** a sensor (60) is provided for detecting the flow conditions and/or the pressure conditions, in particular in the suction chamber (28).

10. Vacuum generator or vacuum gripper according to one of the preceding claims, **characterized in that** the vacuum units (8) operating according to at least two different principles for producing a negative pressure operate simultaneously or sequentially.

## Revendications

1. Générateur de vide ou pince aspirante (6) à air comprimé comprenant au moins deux unités modulaires de vide (8), dans lequel chaque unité modulaire de vide (8) présente une chambre d'aspiration, une ouverture d'aspiration débouchant dans la chambre d'aspiration, une ouverture d'évacuation débouchant de la chambre d'aspiration et au moins une ouverture pour l'air comprimé ou l'air propulseur débouchant dans l'ouverture d'évacuation, caractérisé (e) en ce que les unités modulaires de vide (8) fonctionnent selon au moins deux principes différents pour la génération d'un vide au moyen d'air comprimé, et en ce qu'au moins une ouverture d'évacuation d'une unité modulaire de vide (8) débouche dans l'ouverture pour l'air comprimé ou l'air propulseur de l'autre unité de vide (8).

2. Générateur de vide ou pince aspirante selon la revendication 1, caractérisé (e) en ce que la au moins une unité modulaire de vide (8) est une buse de vide, un éjecteur et/ou un étage de génération de vide.

3. Générateur de vide ou pince aspirante selon l'une quelconque des revendications précédentes, caractérisé (e) en ce que les unités modulaires de vide (8) sont combinées dans un montage en parallèle et/ou dans un montage en série.

4. Générateur de vide ou pince aspirante selon l'une quelconque des revendications précédentes, caractérisé (e) en ce que les unités modulaires de vide (8) sont agencées dans un boîtier (30) commun.

5. Générateur de vide ou pince aspirante selon l'une quelconque des revendications précédentes, caractérisé(e) en ce qu'au moins deux chambres d'aspiration différentes sont séparées l'une de l'autre ou peuvent être reliées l'une à l'autre par un ou plusieurs clapets mobiles (34).

6. Générateur de vide ou pince aspirante selon la revendication 5, caractérisé(e) en ce que la fermeture ou l'ouverture des clapets (34) peut être commandée en fonction du vide et/ou en fonction du débit volumique.

7. Générateur de vide ou pince aspirante selon l'une quelconque des revendications précédentes, caractérisé (e) en ce qu'au moins un des principes est le principe de Venturi (10), le principe de Bernoulli (40), le principe de Coanda (12) ou le principe du vortex (48).

8. Générateur de vide ou pince aspirante selon l'une quelconque des revendications précédentes, caractérisé(e) en ce qu'un dispositif de soufflage (62) est prévu.

9. Générateur de vide ou pince aspirante selon l'une quelconque des revendications précédentes, caractérisé(e) en ce qu'un capteur (60) est prévu pour la détection des rapports d'écoulement et/ou de pression, en particulier dans la chambre d'aspiration (28) .

10. Générateur de vide ou pince aspirante selon l'une quelconque des revendications précédentes, caractérisé (e) en ce que les unités modulaires de vide (8) fonctionnant selon au moins deux principes différents pour la génération du vide fonctionnent de manière simultanée ou séquentielle.
